# EUROPÄISCHE PATENTSCHRIFT

(11) **EP 0 624 230 B1**
(45) Veröffentlichungstag und Bekanntmachung des Hinweises auf die Patenterteilung: **18.12.1996**
(21) Anmeldenummer: 92923593.5
(22) Anmeldetag: 26.11.1992
(51) Int. Cl.: F16D 41/08

(54) **KUPPLUNG FÜR BEIDE DREHRICHTUNGEN MIT SELEKTIVER FREILAUFWIRKUNG**
CLUTCH FOR BOTH DIRECTIONS OF ROTATION AND WITH SELECTABLE FREEWHEEL ACTION
ACCOUPLEMENT POUR LES DEUX SENS DE ROTATION A EFFET SELECTIF DE ROUE LIBRE

(30) Priorität: 20.01.1992 DE 4201375; 10.06.1992 AT 1179/92
(43) Veröffentlichungstag der Anmeldung: 17.11.1994
(73) Patentinhaber: STEYER-DAIMLER-PUCH AKTIENGESELLSCHAFT, A-1010 Wien (AT)
(72) Erfinder: GRATZER, Franz, A-8565 St. Johann (AT); RESELE, Peter, A-8042 Graz (AT)
(86) Internationale Anmeldenummer: AT9200154
(87) Internationale Veröffentlichungsnummer: WO9314328

(56) Entgegenhaltungen:
- EP-A- 0 213 291
- DE-B- 1 168 706
- FR-A- 961 530
- FR-A- 2 075 810
- GB-A- 426 103
- US-A- 1 610 794
- US-A- 2 154 212
- US-A- 2 917 145
- US-A- 2 923 388
- US-A- 3 599 767
- US-A- 4 089 395

## Beschreibung

Die Erfindung handelt von Klemmkörperkupplungen gemäß dem Oberbegriff des 1.Anspruches. Bei allradangetriebenen Kraftfahrzeugen mit einer über eine schlupfgesteuerte Kupplung angetriebenen zweiten Treibachse - meist die Hinterachse - besteht das Problem, daß die Hinterräder durch die Verbindung mit den Vorderrädern zum Überbremsen neigen und so die Bodenhaftung verlieren, was zum Ausbrechen des Fahrzeuges führt. Besonders kritisch sind die Verhältnisse bei Blockierbremsungen bzw. bei Verwendung eines ABS.

Um dem unter Vermeidung einer gesteuerten Trennkupplung entgegenzuwirken, ist die zusätzliche Verwendung eines Freilaufes üblich. Dieser hat aber den Nachteil, daß er für allradgetriebene Rückwärtsfahrt überbrückt werden muß. Alternativ dazu verwendet man einen Doppelfreilauf, der die Übertragung von Antriebskräften vorwärts und rückwärts ermöglicht.

Dieser hat jedoch den Nachteil, sowohl bei Vorwärtsfahrt als auch bei Rückwärtsfahrt im Schleppbetrieb (Motorbremsung) zu entkuppeln, was im Gelände und auf vereisten Bergstraßen zu gefährlichen Situationen führen kann.

Diesen Doppelfreiläufen haftet also der vorerwähnte Nachteil an, bei umgekehrter Kraftflußrichtung in beiden Drehrichtungen uneingeschränkt als Freilauf zu wirken. Beim Allradantrieb eines Kraftfahrzeuges wird der Freilauf jedoch nur bei Vorwärtsfahrt und höherer Geschwindigkeit benötigt, um bei starkem Bremsen den Verlust der Seitenführung durch Blockieren der Hinterräder zu verhindern.

Aus der GB-PS 426 103 ist ein Freilauf für die Anordnung zwischen dem Motor und den Rädern eines Fahrzeuges bekannt, die die Übertragung von Momenten in beiden Richtungen bei niederer antriebsseitiger Drehzahl gestattet. Er weist in beiden Momentenflußrichtungen wirkende und mit einem ersten und zweiten Ring reib- bzw formschlüssig zusammenwirkende Klemmkörper, einen Käfig und mit diesem zusammenwirkende Fliehkörper auf. Letztere laufen mit dem antriebsseitigen Ring um. Dadurch kann die bei hoher Fahrgeschwindigkeit an sich gegebene Freilaufwirkung durch Absenken der antriebsseitigen Drehzahl aufgehoben werden. Dann tritt progressiv die Bremswirkung des Motors auf. Es soll also gerade bei hoher Geschwindigkeit und niederer Motordrehzahl stark gebremst werden. Durch den so entstehenden Stoß, er muß von einer eigens vorgesehenen Dämpfungseinrichtung aufgefangen werden, ist eine verzögerungsfreie und feinfühlige Umschaltvorrichtung bei Umkehr der Momentenflußrichtung nicht erforderlich.

Weiters sind Freiläufe mit fliehkraftgesteuert abhebenden Klemmkörpern an sich bekannt, etwa aus der DE-B 1 168 706, jedoch nur zur Verminderung der Reibung bei lange anhaltendem Freilaufbetrieb.

Der Erfindung liegt somit die Aufgabe zugrunde, eine in beiden Richtungen wirkende Kupplung zu schaffen, die nur dann als Freilauf wirkt, wenn bei Vorwärtsfahrt mit höherer Geschwindigkeit gebremst wird, und dann so schnell umschaltet, daß das besonders gefährliche Ausbrechen der Hinterräder bei scharfem Bremsen zuverlässig verhindert wird.

Erfindungsgemäß wird dieses Ziel durch die kennzeichnenden Merkmale des ersten Anspruches erreicht. Die entsprechenden Klemmkörper beziehungsweise die entsprechenden Flanken der Klemmkörper werden gesteuert durch die Kraftflußrichtung selbsttätig und durch die Reibelemente praktisch verzögerungsfrei in die jeweilige Kuppelstellung gebracht. Das Einnehmen der Kuppelstellung wird nur beim Übergang vom Zugbetrieb bei Vorwärtsfahrt mit höherer Geschwindigkeit in den Schleppbetrieb (von Momentenflußrichtung A auf Momentenflußrichtung B) durch die direkte oder indirekte Wirkung der Fliehkörper auf die entsprechenden Klemmkörper bzw entsprechenden Kuppelflächen der Klemmkörper verhindert. Dadurch wird erreicht, daß beim Bremsen ab einer durch die Größe der Fliehkraft bestimmten Geschwindigkeit die Verbindung zur zweiten angetriebenen Achse selbstätig und ohne Eingriff von außen sicher unterbrochen wird, bei allen anderen praktisch vorkommenden Fahrzuständen aber erhalten bleibt. Die Sicherheit der Unterbrechung wird durch die Reibelemente sichergestellt.

Wenn der erste mit den Klemmkörpern in Wirkverbindung stehende Käfig mit dem zweiten Ring nur reibschlüssig verbunden ist, darf der erste Ring auch formschlüssig mit den Klemmkörpern in Verbindung stehen. Deshalb kann der erste Ring alternativ reibschlüssig oder formschlüssig mit den Klemmkörpern zusammenwirken. Wenn bei der reibschlüssigen Alternative die Reibkraft zwischen erstem Ring und den Klemmkörpern größer als die zwischen erstem Käfig und zweitem Ring ist, sind beide Alternativen in der Wirkung gleichwertig.

In einer ersten Familie von Ausführungsformen der Erfindung ist ein reibschlüssig mit dem mindestens einen ersten Ring in Verbindung stehender zweiter Käfig vorgesehen, wobei die Fliehkörper zwischen erstem und zweitem Käfig wirken (Anspruch 2). Bei dieser Familie handelt es sich um die erste der im vorhergehenden Absatz erwähnten Alternativen. So erhält man einfache und leicht zu fertigende Klemmkörper und Ringe.

Innerhalb dieser Familie sind verschiedene Ausführungsformen möglich.

In einer ersten Ausführungsform der ersten Familie sind zwei Sätze Klemmkörper vorgesehen und die Klemmkörper der beiden Sätze sind abwechselnd hintereinander angeordnet (Anspruch 3), wodurch die Einbaubreite der Kupplung der eines einfachen Freilaufes entspricht.

In einer zweiten Ausführungsform sind die Klemmkörper der beiden Sätze nebeneinander angeordnet und die beiden Käfige wirken mit beiden Sätzen von Klemmkörpern zusammen (Anspruch 4). Diese Variante zeichnet sich durch geringen Durchmesser und dadurch aus, daß sie aus zwei handelsüblichen Freilaufkupplungen zusammengesetzt werden kann, wobei dann die entsprechenden Teile auf geeignete Weise miteinander zu verbinden sind. Dann sind beispielsweise zwei erste und zwei zweite Käfige miteinander verbunden.

In einer zweiten Familie von Ausführungsformen sind die Klemmkörper mit dem ersten Ring formschlüssig verbunden und die Fliehgewichte wirken zwischen erstem Ring und erstem Käfig (Anspruch 5). So erübrigt sich ein zweiter Käfig und die Klemmkörper sind besonders exakt positioniert und geführt.

Für diese beiden Familien von Ausführungsformen gibt es je nach Gestaltung der Fliehkörper verschiedene Varianten: Die Klemmkörper können entweder wie bekannt selbst als Fliehkörper ausgebildet sein, oder sie sind in einer vorteilhaften Variante an einem der mit ihnen zusammenwirkenden Teile mittels eines Schwenkbolzens gelagert, mittels einer Feder gegen die Fliehkraft gehalten und mittels eines Anschlages in ihrem Ausschlag begrenzt und weisen eine Schulter auf, die ab einer bestimmten Drehzahl auf einen Vorsprung des zweiten mit ihnen zusammenwirkenden Teiles drückt. (Anspruch 6)

Die so gestalteten Fliehkörper bleiben bei geringer Drehzahl und Fahrgeschwindigkeit wirkungslos. Ab einer bestimmten Drehzahl schwenken sie auswärts und die Schultern legen sich an die Vorsprünge des zweiten Organes, bis sie ihre durch die Anschläge definierte äussere Stellung einnehmen. Somit können sich bei Wechsel der Momentenflußrichtung die für die Stellung der Klemmkörper maßgebenden Organe der Kupplung nur so weit gegeneinander Verdrehen, bis sich die Klemmkörper in Neutralstellung befinden und die Kupplung gelöst ist.

Die Organe sind entweder in der ersten Familie von Ausführungen erster und zweiter Käfig oder in der zweiten Familie erster Ring und erster Käfig. Durch Einstellen der Anschläge und Abstimmung der Masse der Fliehkörper und der Federkraft läßt sich die Geschwindigkeitsschwelle recht genau bestimmen und die Wirkung tritt bei Erreichen der Schwelle sehr schnell ein. Sie ist - solange sie nur über der Schwelle liegt - von der tatsächlichen Geschwindigkeit unabhängig. Dadurch, daß die Schultern fliehkraftbelastet sind, können sie trotz ihrer hohen Umschaltgeschwindigkeit bei Störungen ohne Zerstörung der Kupplung nachgeben.

In einer weiteren Variante sind die Fliehkörper als in einem der mit ihnen zusammenwirkenden Teile schwenkbar gelagerte und mittels einer Feder gegen die Fliehkraft gehaltene Klinken ausgebildet, die ab einer bestimmten Drehzahl in entsprechende Ausnehmungen des zweiten mit ihnen zusammenwirkenden Teiles eingreifen. (Anspruch 7)

Auch die Klinken legen sich erst ab einer bestimmten Drehzahl in die Ausnehmungen (es sind also keine zusätzlichen Anschläge erforderlich) und wirken dann ganz analog den Fliehkörpern der ersten Variante. Es verdient Beachtung, daß die Klinken abgesehen vom sehr geringen Reibmoment kein Drehmoment übertragen, sondern nur eine Schaltfunktion ausüben. Es besteht also kein Bezug zu den bekannten Klinkenfreiläufen. Die Klinken können daher sehr klein dimensioniert werden, was den Einbaumaßen der Kupplung zugute kommt. In dieser Variante kann die Schaltschwelle und damit die Geschwindigkeit, ab der die Kupplung bei Momentenumkehr gelöst wird, sehr genau eingestellt werden.

Besonders vorteilhaft ist das dann, wenn der erste Ring, sei es durch Reibschluß, sei es durch Formschluß, die Umfangsgeschwindigkeit des Fliehkörpers bestimmt. So kommt der Freilauf selbst bei bereits blockierenden Vorderrädern zuverlässig bei einer genau definierten Vorwärtsgeschwindigkeit zur Wirkung, weil die Drehzahl des ersten Ringes dann der Drehzahl der Hinterräder entspricht.

Schließlich ist noch eine besonders vorteilhafte Gestaltung der Schwenkbolzen angegeben, die es gestattet deren radiale Verschiebungen ohne Spiel aufzunehmen.

Im folgenden wird die Erfindung anhand von Abbildungen erläutert und es werden verschiedene Ausführungsbeispiele beschrieben:
- Figur 1:: Schematische Darstellung eines Kraftfahrzeuges mit Allradantrieb, bei dem die erfindungsgemäße Doppelkupplung angewendet wird,
- Figur 2,3,4 und 5:: Schematische Darstellung der Wirkungsweise der erfindungsgemäßen Doppelkupplung in verschiedenen Fahrzuständen,
- Figur 6:: Erste Ausführungsform einer ersten Familie von Ausführungsformen der erfindungsgemäßen Doppelkupplung in Seitenansicht,
- Figur 7:: Schnitt nach VII-VII in Figur 6,
- Figur 8:: Axialschnitt einer zweiten Ausführungsform der ersten Familie,
- Figur 9:: Schnitt IX-IX in Figur 8,
- Figur 10:: Seitenansicht einer dritten Ausführungsform der ersten Familie,
- Figur 11,12,13 und 14:: Schematische Darstellung der Arbeitsweise einer zweiten Familie von Ausführungsform,
- Figur 15:: Axialschnitt durch eine Ausführungsform der zweiten Familie nach XV-XV in Fig.13,
- Figur 16:: Detail aus Fig.15: Axonometrische Ansicht der Federhülse,
- Figur 17:: Erste Variante der ersten Ausführungsform der ersten Familie erfindungsgemäßer Doppelkupplungen in Seitenansicht,
- Figur 18:: Schnitt nach XVIII-XVIII in Figur 17,
- Figur 19:: Seitenansicht einer ersten Variante der zweiten Ausführungsform der ersten Familie,
- Figur 20:: Schnitt XX-XX in Figur 19,
- Figur 21:: Seitenansicht einer ersten Variante der zweiten Familie von Ausführungsformen der erfindungsgemäßen Doppelkupplung, teilweise geschnitten,
- Figur 22:: Schnitt XXII-XXII in Fig.21,
- Figur 23:: Seitenansicht einer zweiten Variante des zweiten Ausführungsbeispieles der ersten Familie,
- Figur 24:: Schnitt XXIV-XXIV in Fig.23,
- Figur 25:: Seitenansicht eines Ausführungsbeispieles der zwei ten Familie in der dritten Variante,
- Figur 26:: Schnitt XXVI-XXVI in Fig 25,
- Figur 27:: Seitenansicht einer zweiten Variante des zweiten Ausführungsbeispieles der zweiten Familie,
- Figur 28:: Schnitt XXVIII-XXVIII in Fig 27,
- Figuren 29,30,31,32:: Die Ausführungsform der Fig.23 in vier verschiedenen Arbeitsstellungen.

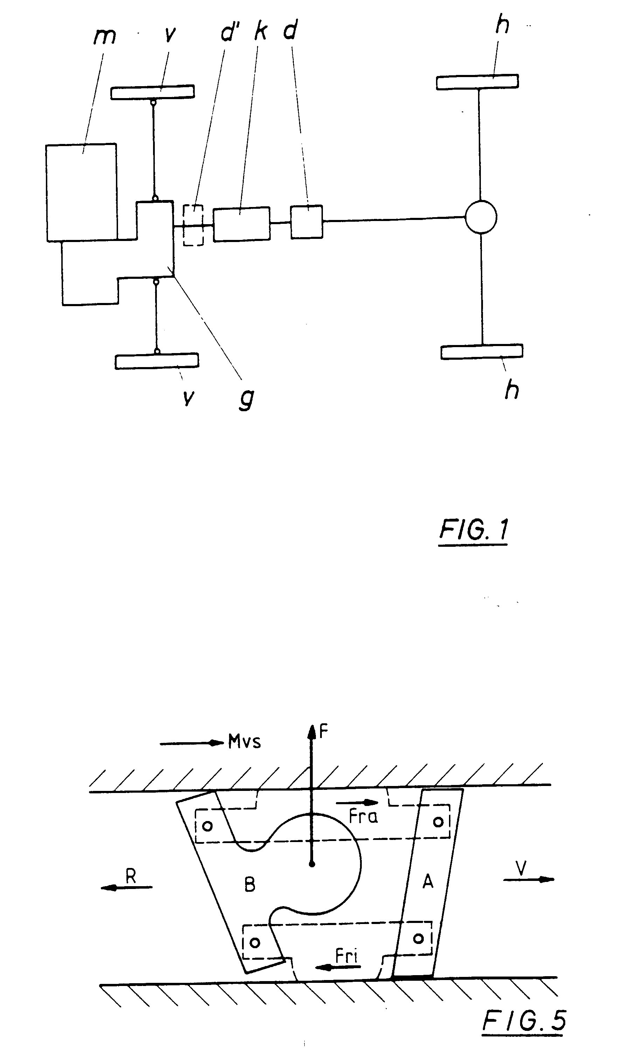

Das in Figur 1 schematisch dargestellte allradangetriebene Kraftfahrzeug weist einen Motorgetriebeblock m auf, von dem über ein Verzweigungsgetriebe g einerseits die Vorderräder v und andererseits über eine schlupfgeregelte Kupplung k und eine erfindungsgemäße Doppelkupplung d die Hinterräder h angetrieben werden. Die schlupfgeregelte Kupplung k könnte eine Lamellenkupplung, eine hydrostatische Kupplung, eine hydrody namische Kupplung, eine gesteuerte oder ungesteuerte Flüssigkeitsreibungskupplung oder eine elektromagnetische oder elektroviskose Kupplung sein. Die erfindungsgemäße Doppelkupplung d könnte auch zwischen dem Verzweigungsgetriebe v und der schlupfgeregelten Kupplung k angeordnet sein, was strichliert mit d' angedeutet ist.

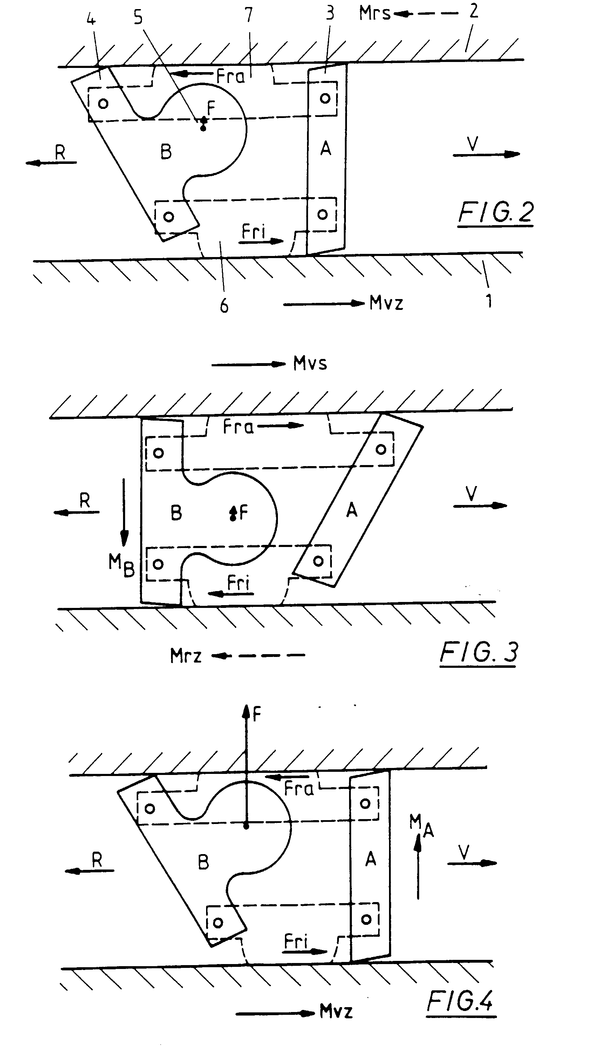

Das Arbeitsprinzip der erfindungsgemäßen Kupplungen wird zuerst anhand der schematischen Figuren 2 bis 5 erläutert. Dort bezeichnet 1 den antriebsseitigen Ring, im folgenden auch zweiter Ring oder Innenring genannt, obwohl er auch der Außenring sein könnte, und 2 den achsseitigen Ring, im folgenden erster Ring oder Außenring genannt. Zwischen den Ringen 1,2 befinden sich Klemmkörper 3 für die Momentenflußrichtung A und Klemmkörper 4 für die Momentenflußrichtung B, die als in entgegengesetzten Richtungen wirkende Klemmkörper ausgebildet sind, was hier nur schematisch dargestellt ist. Die Klemmkörper 3,4 sind durch Reibschuhe 6,7 gelenkig miteinander verbunden. Der Reibschuh 6 reibt am Innenring 1, der Reibschuh 7 am Außenring 2, wobei Reibkräfte Fri bzw. Fra entstehen, die auf die Klemmkörper 3,4 ein Schwenkmoment ausüben. Der Klemmkörper 4 ist mit einem Fliehgewicht 5 versehen, das einem Klemmen entgegenwirkt. Beim Übergang von dieser Prinzipskizze zu konkreten Ausführungsformen werden aus den Reibschuhen 6,7 mit Reibelementen versehene ringförmige Käfige.

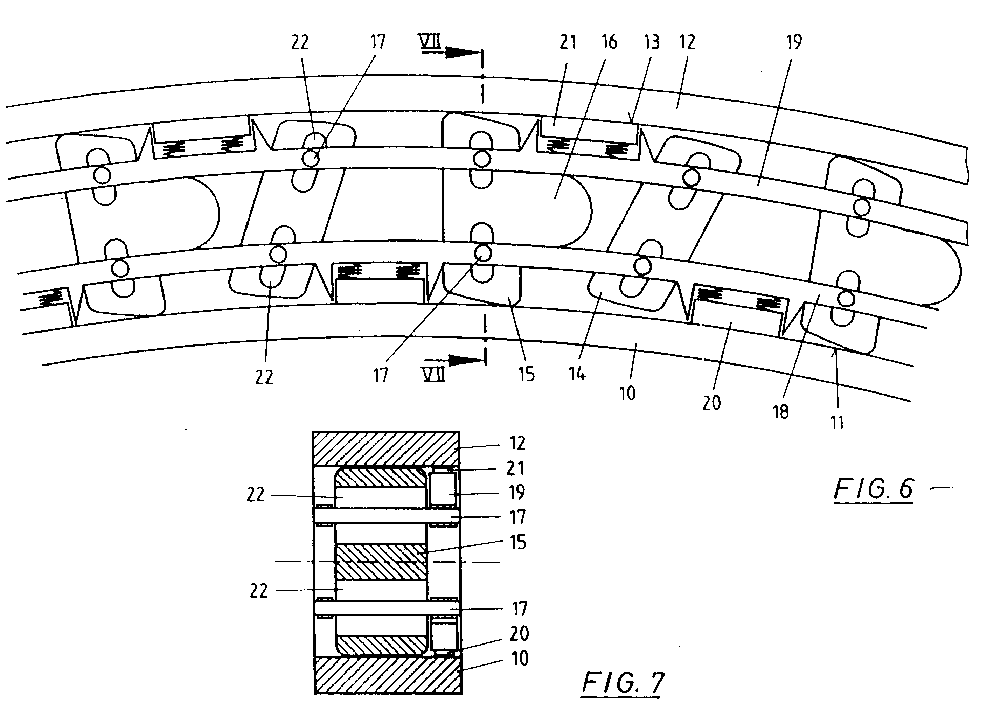

Folgende Betriebszustände sind möglich:
1. Langsame Vorwärtsfahrt, Zug (der Motor treibt) (Fig.2): die Reibschuhe 6,7 aktivieren den Klemmkörper 3 für die Momentenflußrichtung A. In dieser der Figur 2 entsprechenden Stellung kann der Klemmkörper 4 kein Moment übertragen. Die Kupplung übertragt das Moment Mvz.
2. Langsame Vorwärtsfahrt, Schub (die Achse treibt) (Figur 3): Die Reibschuhe 6,7 aktivieren den Klemmkörper 4 für die Momentenflußrichtung B und bringen den Klemmkörper 3 für die Momentenflußrichtung A außer Eingriff. Die Kupplung übertragt das Schubmoment Mvs von der Achse auf den Motor.
3. Schnelle Vorwärtsfahrt, Zug (Figur 4): Die Reibschuhe 6,7 bringen den Klemmkörper 3 für die Momentenflußrichtung A in Eingriff, die Klemmkraft wird durch die Wirkung des Fliehgewichtes 5 des Klemmkörpers 4, der über die Reibschuhe 6,7 auch auf den Klemmkörper 3 wirkt, noch verstärkt. Es wird das Moment Mvz übertragen.
4. Schnelle Vorwärtsfahrt, Schub (Figur 5): Die vom Fliehgewicht 5 auf den Klemmkörper 4 ausgeübte Fliehkraft F hindert den Klemmkörper 4 daran, sich unter der Wirkung der Reibschuhe 6,7 in Kuppelstellung zu bewegen. Das Drehmoment Mvs, das Schubmoment, wird nicht auf den Innenring 1 übertragen. In dieser Stellung wirkt die Doppelkupplung als Freilauf.
5. Langsame Rückwärtsfahrt, Zug: Die Klemmkörper 3,4 nehmen wieder die in Figur 3 dargestellte Stellung ein. Es wird das strichliert angedeutete Moment Mrz übertragen.
6. Langsame Rückwärtsfahrt, Schub: Die Klemmkörper 3,4 nehmen wieder die in Figur 2 abgebildete Stellung ein. Hier wird das wieder strichliert dargestellte Moment Mrs übertragen.
7. Schnelle Rückwärtsfahrt: Eine solche findet üblicherweise nicht statt. Die Klemmkörper 3,4 nehmen wieder die Stellungen der Figur 4 bzw. der Figur 5 ein. Im ersteren Fall kann auch hier ein Moment übertragen werden, wenn dieser Bereich ohne Lastwechsel erreicht wurde; nach einem Lastwechsel ist neuerliches Beschleunigen erst wieder aus der Stellung der Figur 3 möglich. Bei Schub wird auch wieder ein Schubmoment übertragen.

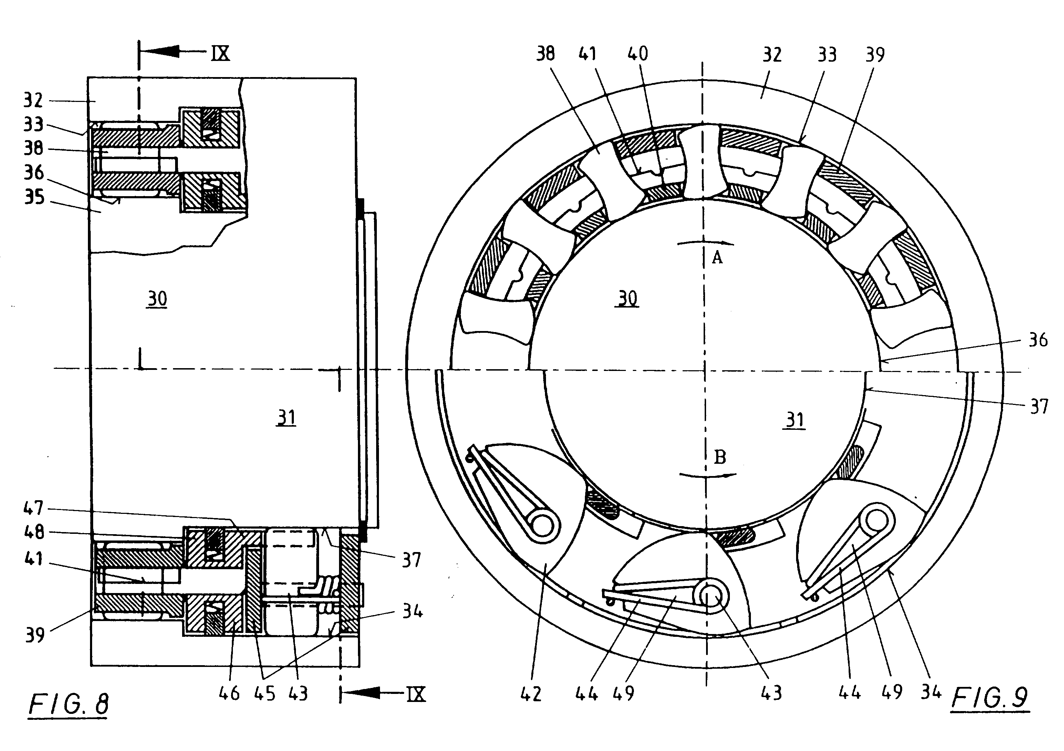

In Figur 6 und 7 befinden sich zwischen der Kuppel fläche 13 des ersten Ringes 12 und der Kuppelfläche 11 des zweiten Ringes 10 eine Anzahl über den Umfang gleichmäßig verteilter Klemmkörper 14 für die Momentenflußrichtung A und Klemmkörper 15 für die Momentenflußrichtung B, letztere sind mit einem Fliehkörper 16 versehen bzw vereinigt. Die Klemmkörper 14,15 weisen Langlöcher 22 auf, in die Gelenkbolzen 17 eingreifen, die mit einem ersten Käfig 18 und mit einem zweiten Käfig 19 verbunden sind, die ihrerseits wieder über Reibschuhe 20,21 mit dem Ringen 10 bzw.12 zusammenwirken.

Die in Figuren 8 und 9 dargestellte zweite Ausführungsform der ersten Familie von Ausführungsform besteht aus zwei nebeneinander angeordneten Kupplungen 30,31, die erste für die Momentenflußrichtung A, die zweite für die Momentenflußrichtung B. Der Einfachheit halber ist der erste Ring 32 ein einziger Ring, es könnten auch zwei Ringe sein, der eine erste und eine zweite innere Kuppelfläche 33,34 verschiedenen Durchmessers aufweist. Ebenso ist auch nur ein zweiter Ring 35 mit einer ersten und zweiten äußeren Kuppelfläche 36,37 verschiedenen Durchmessers vorhanden.

In der ersten Kupplung 30 befindet sich eine Anzahl von in der Momentenflußrichtung A wirkenden Klemmkörpern 38, die mit der ersten inneren Kuppel fläche 33 und der ersten äußeren Kuppelfläche 36 zusammenwirken. Ein erster Käfig 39 und ein zweiter Käfig 40 weisen Ausnehmungen für die Klemmkörper auf und ein Federring 41 spannt die Klemmkörper 38 in Eingriffsrichtung vor.

Die zweite Kupplung 31 für die Momentenflußrichtung B enthält eine Anzahl von Klemmkörpern 42, die um Bolzen 43 schwenkbar und durch Federn 44 in Eingriffsrichtung vorgespannt sind. Die Klemmkörper 42 sind so mit Fliehkörpern 49 versehen, daß deren Fliehkraft den Federn 44 entgegenwirkt. Die Bolzen 43 sind Teil des Außenkäfigs 45 und sind mit äußeren Reibschuhen 46 verbunden. Der erste Käfig 47 weist wieder Durchbrechungen für die Klemmkörper 42 und innere Reibschuhe 48 auf. Der erste Käfig 47 ist mit dem ersten Käfig 40 zu einem Teil verschweißt, ebenso die zweiten Käfige 45,39 mit den Reibschuhen 46. A und B in Figur 9 entsprechen wieder den Momentenflußrichtungen der Kupplungen 30 bzw.31.

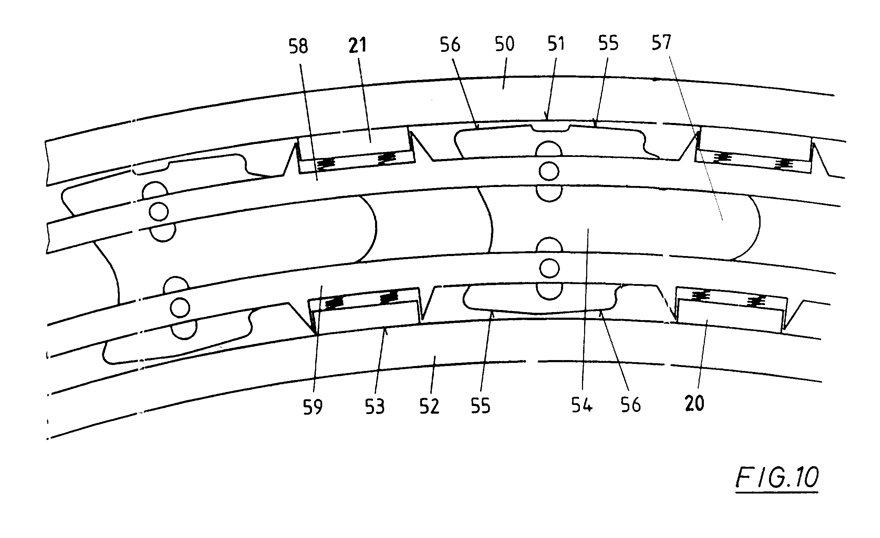

In der dritten Ausführungsform der ersten Familie gemäß Figur 10 ist zwischen einem ersten Ring 50 mit innerer Kuppel fläche 51 und einem zweiten Ring 52 mit äußerer Kuppel fläche 53 ein Satz gleicher Klemmkörper 54 angeordnet, dessen schräg gegenüberliegende Flanken 55 in Momentenflußrichtung A und dessen Flanken 56 in Momentenflußrichtung B wirken. Der Momentenfluß in Richtung B wird bei ausreichender Drehzahl durch die Wirkung der Fliehkraft auf die Fliehkörper 57 aufgehoben. Weiters ist wieder ein zweiter Käfig 58 mit Reibschuhen 21 und ein erster Käfig 59 mit Reibschuhen 20 vorhanden.

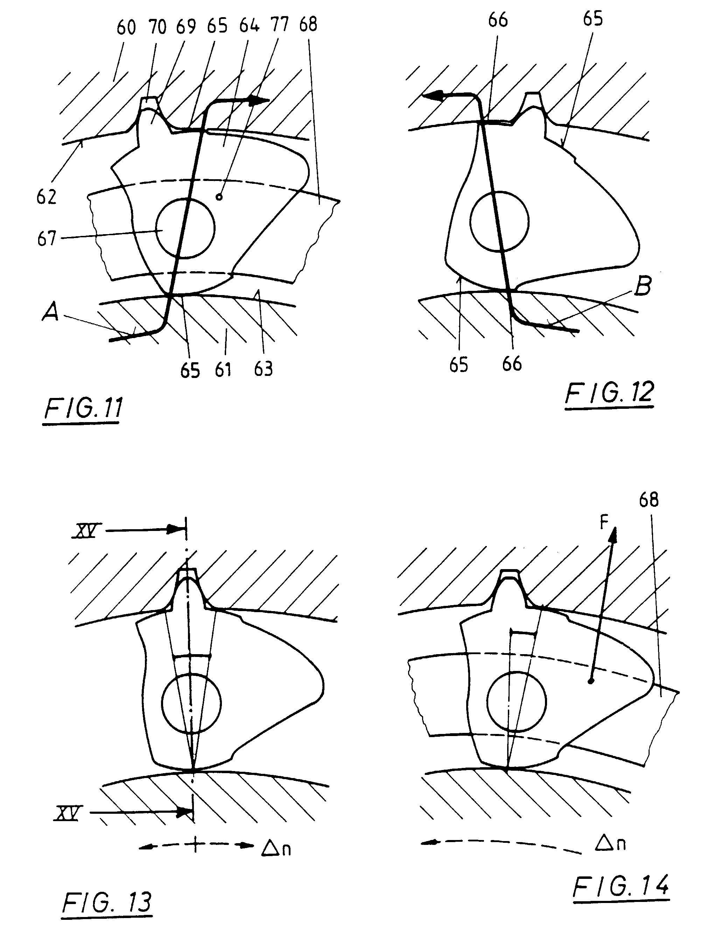

Eine erste Ausführungsform der zweiten Familie wird zuerst anhand der Figuren 11 bis 14 erklärt. Wieder ist eine Anzahl doppelt wirkender Klemmkörper 64 zwischen der inneren Kuppelfläche 62 eines ersten Ringes 60 und der äußeren Kuppel fläche 63 eines zweiten Ringes 61 angeordnet und weist Flanken 65 für die Momentenflußrichtung A und Flanken 66 für die Momentenflußrichtung B auf. Die Klemmkörper 64 weisen wieder integrierte Fliehkörper 77 auf und sind um Bolzen 67 schwenkbar gelagert, die Teil eines ersten Käfigs 68 sind, der wieder auf hier nicht dargestellte Weise reibschlüssig mit dem zweiten Ring 61 zusammenwirkt.

Anstelle eines reibschlüssig mit dem ersten Ring 60 zusammenwirkenden Käfigs ist zwischen diesen Elementen jedoch, wie bei allen Mitgliedern der zweiten Familie, eine formschlüssige Verbindung vorgesehen, die hier aus einem die Flanken 65,66 nach außen überragenden Evolventenzahn 69 besteht, der in eine kinematisch entsprechende Zahnlücke 70 im ersten Ring 60 eingreift. Unabhängig von diesem Unterschied ist die Wirkungsweise der Klemmkörper gleich der der Figur 10. Sie wird im Folgenden erläutert.

Figur 11 zeigt die Stellung bei Momentenflußrichtung A, analog den Figuren 2 und 4, Vorwärtsfahrt mit ziehendem Motor. Die Flanken 65 wirken mit den Kuppelflächen 62,63 zusammen, bei hoher Drehzahl wird die Klemmwirkung durch die Fliehkraft sogar erhöht. Figur 12 zeigt die Stellung analog Figur 3 bei langsamem Schubbetrieb, Momentenflußrichtung B. Die Kuppelverbindung wird durch die Flanken 66 hergestellt, die Fliehkraft ist zu gering, um sie zu verhindern. In Figur 13 befinden sich die Klemmkörper gerade in Übergang vom Zug zum Schubbetrieb, sie stellen daher keine Verbindung her. Die Stellung der Figur 14 ist analog der Figur 4 entsprechend Vorwärtsfahrt mit hoher Geschwindigkeit und Schubbetrieb. Hier wirkt die Fliehkraft F wieder dem auf den Innenkäfig 68 ausgeübten Reibmoment entgegen und die Klemmkörper 64 gleiten auf den Flanken 65.

In dem Axialschnitt durch die in den Figuren 11 bis 14 in ihrer Wirkungsweise dargestellte Kupplung ist noch ein Reibschuh 71 und die in auf der anderen Seite des Innenringes 61 entgegenwirkende Tellerfeder 72 zu sehen. Die Klemmkörper 64 sind über Federhülsen 73 auf den Bolzen 67 des Innenkäfiges 68 gelagert. Die Federhülsen 73 führen die Klemmkörper 64 elastisch und können Verlagerungen sowohl in radialer als auch in Umfangsrichtung aufnehmen.

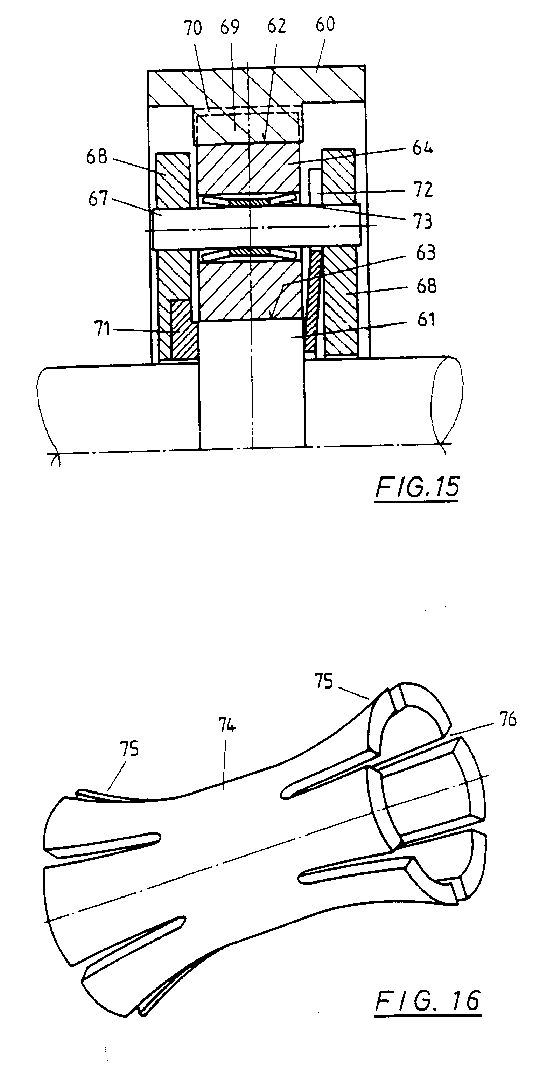

In Figur 16 ist eine solche Federhülse 73 vergrößert abgebildet. Sie besteht aus einem hohlzylindrischen Mittelteil 74 und daran auf beiden Seiten anschließenden Endteilen 75, die bei gleicher Wandstärke auswärts gebogen sind und Schlitze 76 aufweisen.

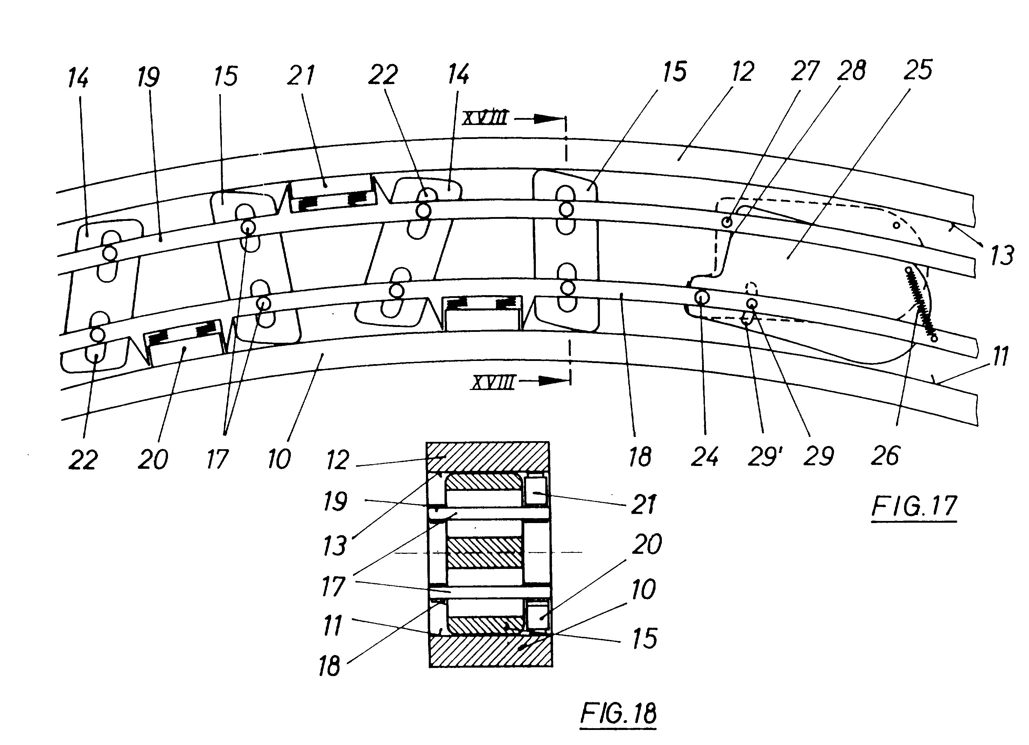

Figuren 17 und 18 zeigen eine erste Variante der ersten Ausführungsform der ersten Familie, analog den Figuren 6,7, wobei gleiche Teile mit denselben Bezugszeichen versehen sind. Der Unterschied besteht darin, daß anstelle der als Fliehgewichte ausgebildeten Klemmkörper am ersten Käfig 18 mittels Schwenkbolzen 24 gelagerte Fliehgewichte 25 vorgesehen sind, die sich unter der Wirkung der Fliehkraft gegen die Kraft einer Feder 26 nach aussen bewegen und bei ausreichender Umfangsgeschwindigkeit mit einer Schulter 28 gegen einen Stift 27 am zweiten Käfig 19 stemmen. Durch dessen Verschiebung in Umfangsrichtung werden die Klemmkörper 15 ausser Eingriff gebracht, wodurch ein Freilauf gegeben ist. Schließlich ist am ersten Käfig 18 noch ein Anschlagbolzen 29 vorgesehen, der in eine Nut 29' eingreift. Diese Nut ist eine Kreisbahn mit dem Schwenkbolzen 24 als Krümmungsmittelpunkt, ihr unteres Ende wirkt bei schneller Vorwärtsfahrt im Zugbetrieb mit dem Anschlagbolzen 29 zusammen. So ist sichergestellt, daß die Klemmkörper nicht über die ausgekuppelte Stellung hinaus bewegt werden.

Folgende Betriebszustände sind bei allen Ausführungsformen möglich, werden im folgenden aber nur anhand der Ausführungsform der Figuren 17 und 18 beschrieben, bei den anderen Ausführungsformen sind sie analog:
1. Langsame Vorwärtsfahrt, Zug (der Motor treibt): der Innenring 10 wird in Momentenflußrichtung A vom Motor aus angetrieben. Die Reibschuhe 20,21 aktivieren die Klemmkörper 14, indem sie sie aufstellen und so an den Kuppelflächen 11,13 der Ringe 10,12 zur Anlage bringen.
2. Langsame Vorwärtsfahrt, Schub (die Achse und damit der Aussenring 12 treibt in Momentenflußrichtung B): Die Reibschuhe 20,21 stellen die Klemmkörper 15 für die Momentenflußrichtung B auf und bringen die Klemmkörper 14 für die Momentenflußrichtung A außer Eingriff. Die Kupplung übertragt das Schubmoment vom Aussenring 12 auf den Innenring 10.
3. Schnelle Vorwärtsfahrt, Zug: Die Reibschuhe 20,21 bringen den Klemmkörper 14 für die Momentenflußrichtung A in Eingriff. Dabei verschiebt sich der äussere Käfig schon so weit in Richtung B, daß das Fliehgewicht 25 keine Anlehnung mehr findet. Deshalb der Anschlagbolzen 29.
4. Schnelle Vorwärtsfahrt, Schub: Die von den Fliehgewichten 25 über den Käfig 19 auf die Klemmkörper 15 ausgeübte Kraft hindert den Klemmkörper 15 daran, sich unter der Wirkung der Reibschuhe 20,21 in Kuppelstellung zu bewegen. Das Schubmoment (Momentenflußrichtung B) wird nicht auf den Innenring 10 übertragen. In dieser Stellung wirkt die Doppelkupplung als Freilauf, der mit den Hinterrädern verbundene Aussenring 12 kann den Innenring 10 überholen.
5. Langsame Rückwärtsfahrt, Zug: Die Klemmkörper 15 werden durch die Wirkung der Reibschuhe 20 in Eingriff gebracht, das Antriebsmoment (Momentenflußrichtung B) wird übertragen.
6. Langsame Rückwärtsfahrt, Schub: Die Klemmkörper 14 nehmen durch die Wirkung der Reibschuhe 21 die Kuppelstellung ein und das Schubmoment (Momentenflußrichtung A) wird übertragen.
7. Schnelle Rückwärtsfahrt: Eine solche findet üblicherweise nicht statt. Trotzdem kann auch hier ein Moment (Momentenflußrichtung B) übertragen werden, wenn dieser Bereich ohne Lastwechsel erreicht wird. Bei Schub wird auch wieder ein Schubmoment (Momentenflußrichtung A) übertragen.

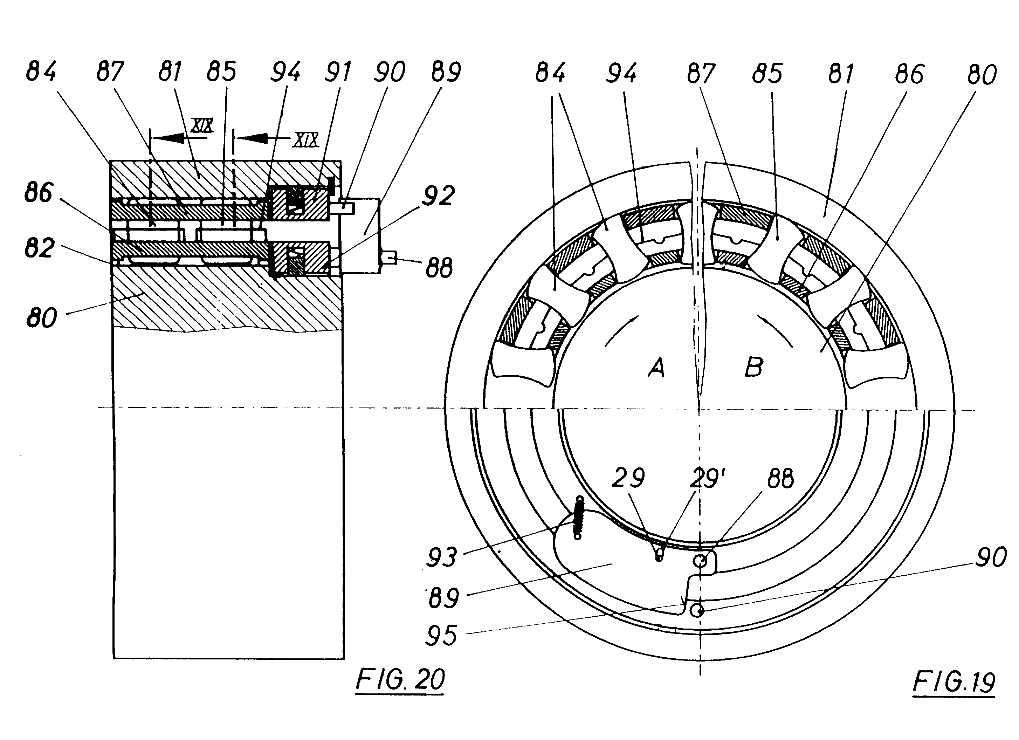

Die in Figuren 19 und 20 dargestellte erste Variante der zweiten Ausführungsform der ersten Familie besteht aus einem zweiten Ring 80 (hier:Innenring) mit einer äusseren Kuppelfläche 82, einem ersten Ring 81 (hier:Aussenring) mit einer inneren Kuppelfläche 83 und zwei nebeneinander angeordneten Reihen von Klemmkörpern 84,85, erstere für die Momentenflußrichtung A, zweitere für die Momentenflußrichtung B. Dementsprechend ist deren Gestalt spiegelverkehrt (siehe Fig.4). Zur genauen Positionierung der Klemmkörper 84,85 können Federringe 94 vorgesehen sein. Die Steuerung der Klemmkörper 84,85 je nach Momentenflußrichtung erfolgt durch einen ersten Käfig 86 (hier:Innenkäfig) und einen zweiten Käfig 87 (hier:Aussenkäfig), die die Klemmkörper umschließen und jeweils mittels Reibschuhen 91,92 von dem Aussenring 81 und dem Innenring 80 mitgenommen werden.

Am Innenkäfig 86 sind mittels Schwenkachsen 88 (aus Gründen des Massenausgleichs) mindestens zwei Fliehgewichte 89 gelagert. Diese werden von Federn 93 nach innen gezogen. Bei ausreichender Umfangsgeschwindigkeit bewegen sie sich so weit nach aussen, daß sich ihre Schultern 95 gegen die Stifte 90 am Aussenkäfig 87 stemmen und diesen gegenüber dem Innenkäfig 86 verdrehen. Dadurch wird erreicht, daß die Klemmkörper 85 für die Momentenflußrichtung B nicht zur Wirkung kommen und die Kupplung im Schleppbetrieb bei höherer Geschwindigkeit als Freilauf wirkt. Bei Momentenflußrichtung A und hoher Geschwindigkeit wirkt wieder der Anschlagbolzen 29.

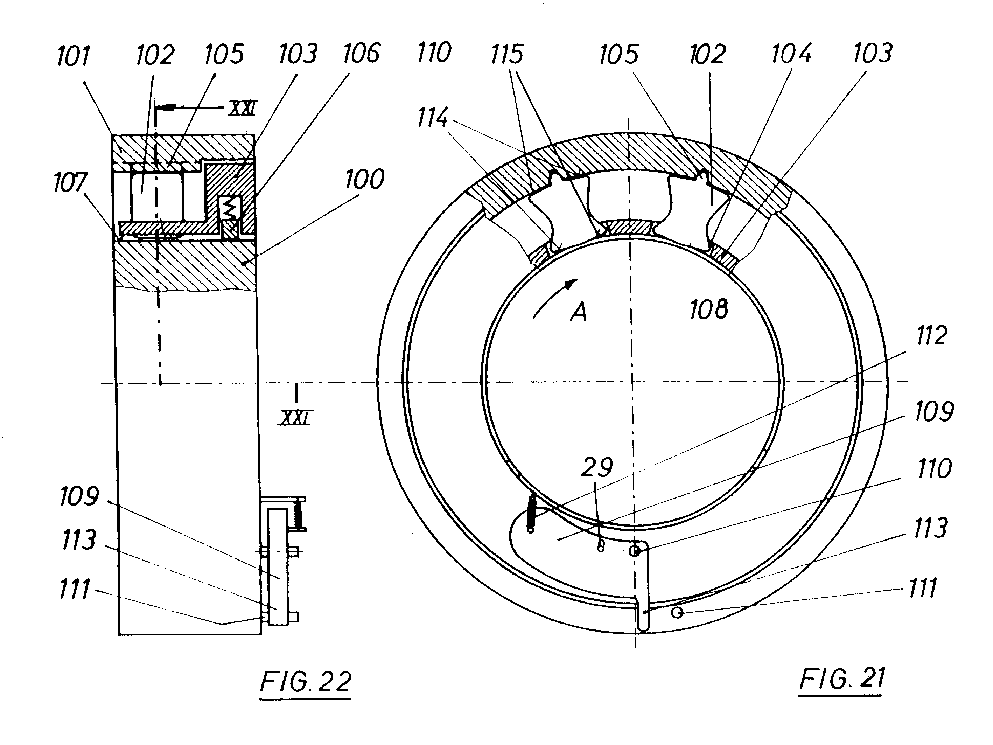

In einer Variation der ersten Ausführungsform der zweiten Familie gemäß Figur 21,22 ist zwischen einem Außenring 101 mit innerer Kuppelfläche 108 und einem Innenring 100 mit äußerer Kuppelfläche 107 ein Satz gleicher Klemmkörper 102 angeordnet, dessen Flanken von der abgebildeten Neutralstellung aus je nach Neigungsrichtung in einer der beiden Momentenflußrichtungen (A,B) wirken. Weiters ist ein Innenkäfig 103 mit Durchbrechungen 104 für die Klemmkörper 102 und mit Reibschuhen 106 zur reibschlüssigen Verbindung mit dem zweiten Ring 100 vorhanden. Die Klemmkörper 102 weisen je einen Zahn 105 auf, der in entsprechende Zahnlücken des ersten Ringes 101 eingreift. Anstelle eines Zahnes könnte jedoch ein Schwenkbolzen vorgesehen sein und die formschlüssige Verbindung kann auch mit dem Innenring 100 bestehen. Dann ist eben der Innenring erster Ring. Die Klemmkörper 102 weisen ein Paar Arbeitsflanken 114 für die Momentenflußrichtung A und ein paar Arbeitsflanken 115 für die Momentenflußrichtung B auf.

Am Innenkäfig 103 sind in Schwenkachsen 110 Fliehgewichte 109 gelagert und von einer Feder 112 nach innen gezogen. Bei ausreichend hoher Umfangsgeschwindigkeit schwenken die Fliehgewichte 109 nach aussen und drücken mit einem Daumen 113 auf am Aussenring befestigte Stifte 111. Dadurch wird im Schubbetrieb der Aussenring 101 gegenüber dem Innenkäfig 100 verdreht und die Klemmkörper 102 in die ausgekuppelte Stellung gebracht bzw in dieser gehalten. Im Zugbetrieb treten wieder die Anschläge 29 in Wirkung.

Nun werden die möglichen Ausführungsformen in einer zweiten Variante beschrieben:

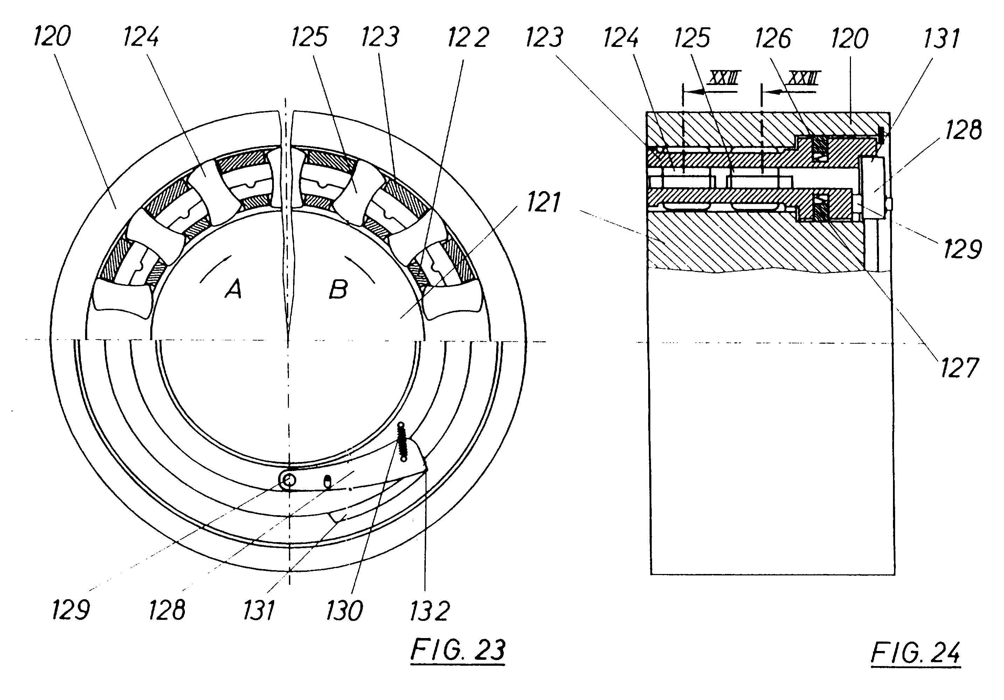

Die in den Figuren 23,24 dargestellte Kupplung ist eine Variante der ersten Familie. Sie besteht aus einem ersten Ring 120 (hier der Außenring), einem zweiten Ring 121 (hier der Innenring), einem ersten Käfig 122 und einem zweiten Käfig 123. Es sind zwei Sätze von Klemmkörpern nebeneinander angeordnet, ein Satz für die Momentenflußrichtung A (124) und ein Satz für die Momentenflußrichtung B (125), die beide mit den beiden Ringen 120,121 und den beiden Käfigen 122,123 zusammenwirken.

Der erste Käfig 122 ist mit dem zweiten Ring 121 durch Reibschuhe 127 reibungsverbunden, der zweite Käfig 123 mit dem ersten Ring 120. Am ersten Käfig 122 ist weiters eine Klinke 128 auf einer Schwenkachse 129 gelagert. Sie wird von einer Feder 130 einwärts gezogen und greift ab einer bestimmten Umfangsgeschwindigkeit in eine Ausnehmung 131 des zweiten Käfigs 123 ein. Bei dieser Ausführungsform ist mit Vorteil der zweite Ring 121 der Innenring und mit dem anzutreibenden Rädern verbunden. Bei der Dimensionierung der Reibglieder ist darauf zu achten, daß die Querkörper 124,125 sich bei Überholfunktion des Freilaufes mit dem ersten Ring 120 bewegen, weil sie durch die Fliehkraft nach außen gedrückt werden.

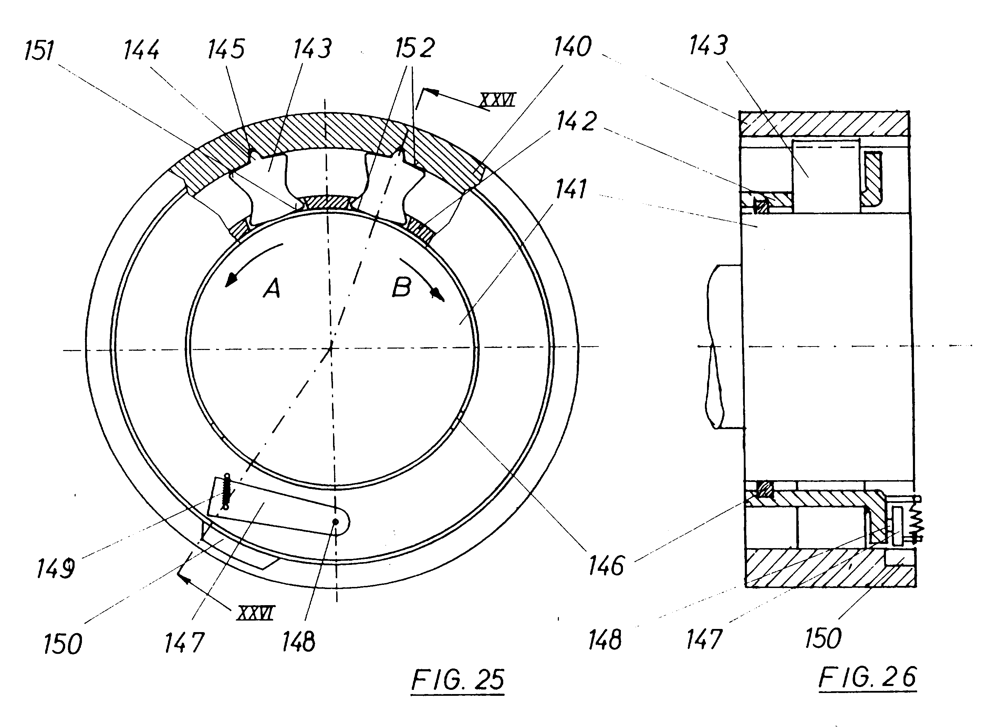

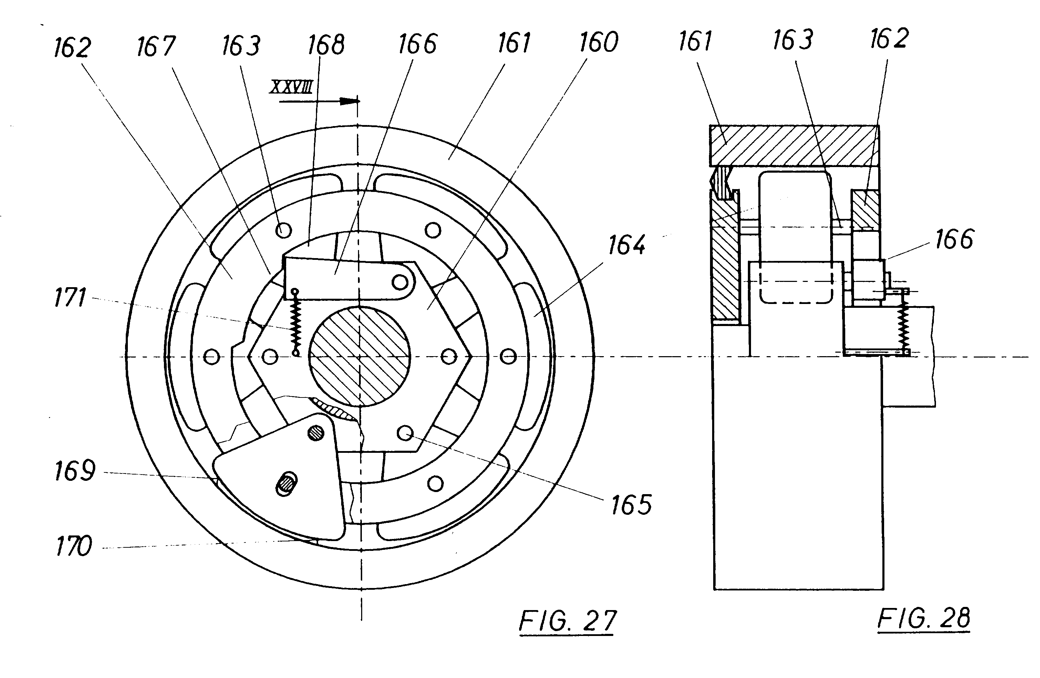

Die Ausführungsform der Figuren 25,26 gehört der zweiten Familie an. Sie besteht aus einem ersten Ring 140 (hier der Außenring), einem zweiten Ring 141, einem einzigen Käfig 142 und einem Satz symmetrischer Klemmkörper 143 für beide Momentenflußrichtungen. Sie verfügt über keinen zweiten Käfig, statt dessen sind die Klemmkörper 143 mit dem ersten Ring 140 formschlüssig verbunden. Sie weisen dazu je einen Evolventenzahn 144 auf, der eine Zahnlücke 145 des ersten Ringes 140 eingreift.

Zwischen dem Käfig 142 und dem zweiten Ring 141 sind Reibschuhe 146 angeordnet. Eine Klinke 147 (aus Wuchtungsgründen werden es in der Praxis mindestens zwei sein) ist am Käfig 142 um eine Achse 148 schwenkbar gelagert und wird von einer Feder 149 einwärts gehalten. Die Klinke 147 greift bei ausreichender Umfangsgeschwindigkeit in eine Vertiefung 150 im ersten Ring 140 ein. Die Klemmkörper 143 weisen je ein Paar gegenüberliegender Arbeitsflanken 151,152 für jeweils die Momentenflußrichtung A oder B auf.

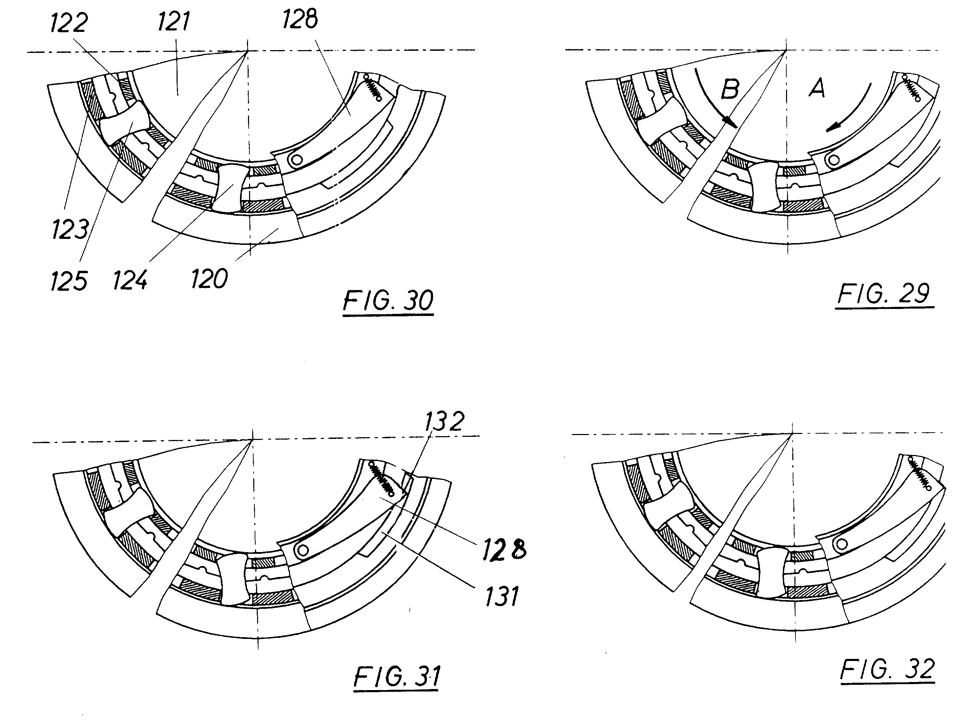

Figuren 27,28 zeigen ein weiteres Ausführungsbeispiel der zweiten Familie in der zweiten Variante. Sie besteht aus einem ersten Ring 160 (hier der Innenring), einem zweiten Ring 161 und einem Käfig 162 mit Achsen 163, um die die symmetrischen Klemmkörper 164 schwenkbar angebracht sind.

Die Klemmkörper 164 sind weiters am ersten Ring 160 im Kuppelbolzen 165 schwenkbar gelagert. Auf dem ersten Ring 160 ist eine Klinke 166 angeordnet, die mit einer Ausnehmung 168 bzw einer Nase 167 des Käfigs 162 bei ausreichender Umfangsgeschwindigkeit zusammenwirkt.

Anhand der Figur 29 bis 32 wird nun die Arbeitsweise der dritten Variante anhand der Ausführungsform der Figuren 23,24 beschrieben. Dazu wird angenommen, daß der erste Ring 120 der antriebsseitige und der zweite Ring 121 der abtriebsseitige (mit den anzutreibenden Rädern verbundene) ist.

Figur 29: Bei langsamen Zugbetrieb vorwärts treibt der erste Ring 120 über die Klemmkörper 124 den zweiten Ring 121. Die Klinke 128 wird von der Feder in der inneren Stellung gehalten, kommt also nicht zur Wirkung.

Figur 30: Beim Übergang in den Schleppbetrieb verdrehen sich durch den Wechsel der Momentenflußrichtung von A zu B die Käfige 122,123 gegeneinander, die Klemmkörper 124 kommen außer Eingriff und die Klemmkörper 125 für die Momentenflußrichtung B kommen in Eingriff. Bei langsamer Vorwärtsfahrt ist die Kupplung also auch im Schleppbetrieb geschlossen.

Figur 31: Bei schneller Vorwärtsfahrt wird das Drehmoment wieder über die Klemmkörper 124 übertragen, wegen der hohen Umfangsgeschwindigkeit ist die Klinke 128 jedoch in ihrer äußeren Stellung und taucht in die Vertiefung 131 ein. Da sich die beiden Ringe 120,121 aber mit gleicher Geschwindigkeit drehen, wirkt sich die Klinke 128 nicht aus.

Figur 32: Wenn nun bei schneller Vorwärtsfahrt vom Zug- in den Schleppbetrieb übergegangen wird (Bremsung), überholt der zweite Ring 121 den ersten Ring 120. Dabei werden die Klemmkörper 124 außer Eingriff gebracht. Nun ist der Abstand 170 (Figur 31) zwischen Klinke und der Brust 132 der Ausnehmung aufgebraucht und der erste Käfig 122 mit der Klinke 128 kann sich nicht mehr weiterverdrehen. Dadurch können die Klemmkörper 125 für die Momentenflußrichtung B nicht in Eingriff gebracht werden und die Kupplung wirkt als Freilauf.

## Patentansprüche

1. Klemmkörperkupplung für beide Drehrichtungen für den Antrieb der zweiten angetriebenen Achse eines Alladfahrzeuges, bestehend aus:
a) mindestens einem ersten Ring (12; 32; 50; 60; 81; 101; 120; 140; 160),
b) mindestens einem zweiten Ring (10; 35; 52; 61; 80; 100; 121; 141; 161),
c) mindestens einem Satz schwenkbarer Klemmkörper (14,15; 38,42; 54; 64; 84,85; 102; 124,125; 143; 164) und
d) mindestens einem in Umfangsrichtung verdrehbaren und mit den Klemmkörpern (14,15; 38,42; 54; 64; 84,85; 102; 124,125; 143; 164) in Wirkverbindung stehenden Käfig (18,19; 39,40,45,47; 58,59; 68; 86,87; 103; 122,123; 142; 162),
e) der mindestens eine erste Ring (12; 32; 50; 60; 81; 101; 120; 140; 160) reib- oder formschlüssig mit den Klemmkörpern (14,15; 38,42; 54; 64; 84,85; 102; 124,125; 143; 164) in Wirkverbindung steht,
**dadurch gekennzeichnet**, daß
f) ein erster Käfig (18; 40,47; 59; 68; 86; 103; 122; 142; 162) mit einem zweiten Ring (10; 35; 52; 61; 80; 100; 121; 141; 161) permanent über ein erstes Reibglied (20; 48; 71,72; 92; 106; 127; 146) in Verbindung steht,
g) wobei der erste Käfig (18; 40,47; 59; 68; 86; 103; 122; 142; 162) im Zusammenwirken mit der reib- oder formschlüssigen Verbindung und mit dem ersten Reibglied (20; 48; 72; 92; 106; 127; 146) die Schwenkstellung der Klemmkörper in Abhängigkeit von der Richtung der Drehzahldifferenz zwischen erstem und zweitem Ring bestimmt, und daß
h) Fliehkörper (16; 25; 49; 57; 77; 89; 109; 128; 147; 166) vorgesehen sind, die ab einer bestimmten Fahrgeschwindigkeit auf die Schwenkstellung der Klemmkörper derartig einwirken, daß die bei negativer Momentenflußrichtung (B) wirkenden Klemmkörper (15; 42; 85; 125) oder deren Flankenteile (55; 66; 115; 152; 170) nicht in Eingriff gelangen können.

2. Kupplung nach Anspruch 1, **dadurch gekennzeichnet**, daß ein mit dem mindestens einen ersten Ring (12; 32; 50; 81; 120) über zweite permanent wirkende Reibglieder (21; 46; 91; 126) in Verbindung stehender zweiter Käfig (19; 39,45; 58; 87; 123) vorgesehen ist, wobei die Fliehkörper (16; 49; 25; 57; 89; 128) zwischen erstem Käfig (18; 40,47; 59; 86; 122) und zweitem Käfig wirken. (Figs. 6,7; 8,9; 10; 19,20; 23,24).

3. Kupplung nach Anspruch 2, **dadurch gekennzeichnet**, daß zwei Sätze Klemmkörper (14,15; ) vorgesehen sind und daß die Klemmkörper (14,15) der beiden Sätze abwechselnd hintereinander zwischen einem zweiten Ring (10) und einem ersten Ring (12) angeordnet sind. (Figs. 6,7; 17,18).

4. Kupplung nach Anspruch 2, **dadurch gekennzeichnet**, daß zwei Sätze Klemmkörper vorgesehen sind und daß die Klemmkörper der beiden Sätze (38,42; 84,85; 124,125) nebeneinander angeordnet sind und mindestens ein erster (40,47; 86,92; 122) und zweiter Käfig (39,45; 87,91; 123) mit beiden Sätzen von Klemmkörpern (38,42; 84,85; 124,125) zusammenwirken. (Figs. 8,9; 19,20; 23,24).

5. Kupplung nach Anspruch 2 mit einem einzigen Satz von in beiden Momentenflußrichtungen (A,B) wirkenden Klemmkörpern (54; 64; 102; 143; 164), **dadurch gekennzeichnet**, daß ein Satz von Klemmkörpern (64; 102; 143; 164) vorgesehen ist, die mit dem ersten Ring (60; 101; 140; 160) formschlüssig verbunden sind und daß die Fliehkörper (77; 109; 147; 166) am erstem Käfig (68; 103; 142; 162) schwenkbar gelagert sind und auf den erstem Ring (60; 101; 140; 160) wirken. (Figs. 11; 21,22; 25,26; 27,28).

6. Kupplung nach einem der Ansprüche 2 oder 5, **dadurch gekennzeichnet**, daß die Fliehkörper (25; 89; 109) an einem der mit ihnen zusammenwirkenden Teile (18; 92; 103) mittels eines Schwenkbolzens (24; 88; 110) gelagert, mittels einer Feder (26; 93; 112) gegen die Fliehkraft gehalten und mittels eines Anschlages (29) in ihrem Ausschlag begrenzt sind und eine Schulter (28; 91; 113) aufweisen, die ab einer bestimmten Drehzahl auf einen Vorsprung (27; 90; 111) des zweiten mit ihnen zusammenwirkenden Teiles (19; 91; 101) drückt. (Figs. 17,18: 19,20; 21,22).

7. Kupplung nach einem der Ansprüche 2 oder 5, **dadurch gekennzeichnet**, daß die Fliehkörper als in einem der mit ihnen zusammenwirkenden Teile schwenkbar gelagerte und mittels einer Feder (130; 149; 171) gegen die Fliehkraft gehaltene Klinken (128; 147; 166) ausgebildet sind, die ab einer bestimmten Drehzahl in entsprechende Ausnehmungen (131, 150, 168) des zweiten mit ihnen zusammenwirkenden Teiles (123; 140; 162) eingreifen. (Figs. 23,24; 25,26; 27,28).

8. Kupplung nach Anspruch 1,2 oder 5, **dadurch gekennzeichnet**, daß der (die) Käfig(e) (18,19; 45; 58,59; 68) Bolzen (17; 43; 67; 163) aufweisen, die radial federnd von Öffnungen der Klemmkörper (14; 15; 42; 57; 77) aufgenommen werden (Figs. 6,7; 8,9; 10; 11; 27,28).

9. Kupplung nach Anspruch 8, **dadurch gekennzeichnet**, daß zwischen Klemmkörper (14; 15; 42; 57; 77) und Bolzen (17; 43; 67) Federhülsen (73) angebracht sind, die aus einem hohlzylindrischen Mittelteil (74) und geschlitzten Endteilen (75) größeren Durchmessers bestehen.

## Claims

1. Reversible sprag clutch, consisting of:
a) at least one first ring (12; 32; 50; 60; 81; 101; 120; 140; 160),
b) at least one second ring (10; 35; 52; 61; 80; 100; 121; 141; 161),
c) at least one set of tiltable sprags (14,15; 38,42; 54; 64; 84,85; 102; 124,125; 143; 164) and
d) at least one circumferentially rotatable cage (18,19; 39,40,45,47; 58,59; 68; 86,87; 103; 122,123; 142; 162) cooperating with the sprags (14,15; 38,42; 54; 64; 84,85; 102; 124,125; 143; 164),
e) the at least one first ring (12; 32; 50; 60; 81; 101; 120; 140; 160) is in frictional or positively engaging operational contact with the sprags (14,15; 38,42; 54; 64; 84,85; 102; 124,125; 143;164),
**characterized in that**
f) a first cage (18; 40,47; 59; 68; 86; 103; 122; 142; 162) is in permanent friction contact with a second ring (10; 35; 52; 61; 80; 100; 121; 141; 161) by means of a first friction element (20; 48; 71,72; 92; 106; 127; 146),
g) the first cage (18; 40,47; 59; 68; 86; 103; 122; 142; 162) determining in cooperation with the frictional or positively engaging contact and with the first friction element (20; 48; 72; 92; 106; 127; 146) the tilting angle of the sprags depending on the direction of the difference between the rotating speeds of the first and second ring, and in that
h) centrifugal bodies (16; 25; 49; 57; 77; 89; 109; 128; 147; 166) are provided, influencing the tilting angle of the sprags above a predetermined rotating speed in such a way as to prevent the sprags (15; 42; 85; 125) that are effective in the negative direction of torque flow (B) or their flank parts (55; 66; 115; 152; 170) from being engaged.

2. Clutch according to claim 1, **characterized**, in that a second cage (19; 39,45; 58; 87; 123) is frictionally cooperating with the at least one first ring (12; 32; 50; 81; 120), by means of second friction elements (21; 46; 91; 126) in permanent contact, the centrifugal bodies (16; 49; 25; 57; 89; 128) beeing effective between first cage (18; 40,47; 59; 86; 122) and second cage. (Figs. 6,7; 8,9; 10; 19,20; 23,24).

3. Clutch according to claim 2, **characterized** in that two sets of sprags (14,15) are provided and the sprags (14,15) belonging to either of the sets are arranged in turn one behind the other between a second ring (10) and a first ring (12). (Figs. 6,7; 17,18).

4. Clutch according to claim 2, **characterized** in that two sets of sprags are provided and that the sprags of the two sets (38,42; 84,85; 124,125) are arranged side by side and at least one first (40,47; 86,92; 122) and second cage (39,45; 87,91; 123) cooperates with both sets of sprags (38,42; 84,85; 124,125). (Figs. 8,9; 19,20; 23,24).

5. Clutch according to claim 2 with a single set of sprags (54; 64; 102; 143; 164) operative in both torque flow directions (A,B), **characterized**, in that a set of sprags (64; 102; 143; 164) is provided, which is positively engaging the first ring (60; 101; 140; 160) and that the centrifugal bodies (77; 109; 147; 166) are tiltably supported in the first cage ((68; 103; 142; 162) and act on the first ring (60; 101; 140; 160). (Figs. 11; 21,22; 25,26; 27,28).

6. Clutch according to any of the claims 2 or 5, **characterized** in that the centrifugal bodies (25; 89; 109) are journalled in one of the elements cooperating with them (18; 92; 103) by means of a pin (24; 88; 110), are held against centrifugal force by means of a spring (26; 93; 112) their swing being limited by means of a stop (29) and present a shoulder (28; 91; 113), resting on a projection (27; 90; 111) of the second element cooperating with them (19; 91; 101) above a predetermined rotating speed. (Figs. 17,18: 19,20; 21,22).

7. Clutch according to any of the claims 2 or 5, **characterized** in that the centrifugal bodies are pawls (128; 147; 166) tiltably supported in the element cooperating with them and held against centrifugal force by means of a spring (130; 149; 171), the pawls engaging above a predetermined rotating speed recesses (131, 150, 168) in the second element (123; 140; 162) cooperating with them. (Figs. 23,24; 25,26; 27,28).

8. Clutch according to claim 1,2 or 5, **characterized** in that the cage(s) (18,19; 45; 58,59; 68) are provided with bolts (17; 43; 67; 163), received radially elastically by openings in the sprags (14; 15; 42; 57; 77). (Figs. 6,7; 8,9; 10; 11; 27,28).

9. Clutch according to claim 8, **characterized** in that spring bushings (73) are fitted between the sprags (14; 15; 42; 57; 77) and the bolts (17; 43; 67), the bushings consi-sting of a tubelike middle section (74) and slitted end sections (75) of larger diameter.

## Revendications

1. Embrayage à roue libre reversible destiné à l'entrainement d'une seconde axe motrice d'un véhicule à toutes roues motrices, comportant:
a) au moins une première bague (12; 32; 50; 60; 81; 101; 120;140; 160),
b) au moins une seconde bague (10; 35; 52; 61; 80; 100; 121;141; 161),
c) au moins un jeu de corps d'arrét basculants (14,15; 38,42; 54; 64; 84,85; 102; 124,125; 143; 164) et
d) au moins une cage tournante (18,19; 39,40,45,47; 58,59; 68; 86,87; 103; 122,123; 142; 162) sur son axe et coopérant avec le corps d'arrét (14,15; 38,42; 54; 64; 84,85; 102; 124,125; 143; 164),
e) la au moins une première bague (12; 32; 50; 60; 81; 101; 120; 140; 160) étant en prise frictionelle oubien en d'engagement positif avec les corps d'arrét (14,15; 38,42; 54; 64; 84,85; 102; 124,125; 143;164),
**caractérisé** en ce que
f) une première cage (18; 40,47; 59; 68; 86; 103; 122; 142; 162) est en contact de friction permanent avec une seconde bague (10; 35; 52; 61; 80; 100; 121; 141; 161) par moyen d'un premier élément de friction (20; 48; 71,72; 92; 106; 127; 146),
g) la première cage (18; 40,47; 59; 68; 86; 103; 122; 142; 162) determinant en coopération avec la prise frictionelle oubien positive et avec le premier élément de friction (20; 48; 72; 92; 106; 127; 146) l'angle de basculement du corps d'arrét en fonction de la direction de la difference entre les vitesses rotatives de la première et de la seconde bague, et en ce que
h) des masselottes (16; 25; 49; 57; 77; 89; 109; 128; 147; 166) sont prévues, qui influencent l'angle de basculement du corps d'arrét à l'ecces d'une vitesse rotative predeterminée, de manière à empècher les corps d'arrét (15; 42; 85; 125) effectives dans la direction de la transmission de couple moteur (B) oubien les parties appropriées de leur contour (55; 66; 115; 152; 170) d'être engagées.

2. Embrayage selon la revendication 1, **caractérisé**, en ce qu' une seconde cage (19; 39,45; 58; 87; 123) est en engagement frictionel avec l'au moins une première bague (12; 32; 50; 81; 120) par moyen de seconds éléments de friction (21; 46; 91; 126) en prise permanente, les masselottes (16; 49; 25; 57; 89; 128) étant effectives entre la première cage (18; 40,47; 59; 86;122) et la seconde cage. (Figs.6,7; 8,9; 10; 19,20; 23,24).

3. Embrayage selon la revendication 2, **caractérisé** en ce que deux jeux de corps d'arrét (14,15) sont prévus et ewn ce que les corps d'arrét (14,15) de l'un ou l'autre des jeux sont arrangés l'un après l'autre entre une seconde bague (10) et une première bague (12). (Figs. 6,7; 17,18).

4. Embrayage selon la revendication 2, **caractérisé** en ce que deux jeux de corps d'arrét sont prévus et en ce que les corps d'arrét des deux jeux (38,42; 84,85; 124,125) sont arrangés l'un à coté de l'autre, et au moins une première (40,47; 86, 92; 122) et une seconde cage (39,45; 87,91; 123) coopèrent avec les deux jeux de corps d'arrét (38,42; 84,85; 124,125). (Figs. 8,9; 19,20; 23,24).

5. Embrayage selon la revendication 2 avec un seul jeu de corps d'arrét (54; 64; 102; 143; 164) operatives dans tous les deux directions de transmission de couple moteur (A,B), **caractérisé**, en ce que un jeu de corps d'arrét (64; 102; 143; 164) est prévu lequel est en engagement positif avec la première bague (60; 101; 140; 160) et en ce que les masselottes (77; 109; 147; 166) sont montés basculants dans la première cage (68; 103; 142; 162) et sont effectives sur la première bague (60; 101; 140; 160). (Figs. 11; 21,22; 25,26; 27,28).

6. Embrayage selon l'une des revendications 2 ou 5, **characterized** en ce que les masselottes (25; 89; 109) sont montés basculants dans l'un des éléments coopérants avec ceux-ci (18; 92; 103) par moyen d'un tourillon (24; 88; 110), en ce qu'elles sont tenues par un ressort (26; 93; 112) à l'encontre de la force centrifuge, en ce que leur débattement est limité par une butée (29) et en ce qu'elles possèdent un épaulement (28; 91; 113) s'appuyant contre une projection (27; 90; 111) du second element coopérant avec ceux-ci (19; 91; 101) à l'excès d'une vitesse rotative prédéterminée. (Figs. 17,18: 19,20; 21,22).

7. Embrayage selon l'une des revendications 2 ou 5, **characterized** en ce que les masselottes sont des cliquets (128; 147; 166) montés basculants dans l'un des éléments coopérants avec ceux-ci et sont tenues par un ressort (130; 149; 171) à l'encontre la force centrifuge, les cliquets venant en prise avec des encoches (131, 150, 168) dans le second element (123; 140; 162) coopérant avec ceux-ci, à l'excès d'une vitesse rotative predeterminée. (Figs. 23,24; 25,26; 27,28).

8. Embrayage selon l'une des revendication 1, 2 ou 5, **caractérisé** en ce que la (les) cage(s) (18,19; 45; 58,59; 68) sont pourvues de tourillons (17; 43; 67; 163) en prise avec des ouvertures dans les corps d'arrét (14; 15; 42; 57; 77) de manière radialement elastique. (Figs. 6,7; 8,9; 10; 11; 27,28).

9. Embrayage selon la revendication 8, **caractérisé** en ce que des douilles élastiques (73) sont montées entre les corps d'arrét (14; 15; 42; 57; 77) et les tourillons (17; 43; 67), ces douilles se composant d'une section centrale (74) tubiforme et des éxtrèmitées fentées (75) d'un diamètre supérieur.
